# EUROPÄISCHE PATENTSCHRIFT

(11) **EP 1 549 520 B1**
(45) Veröffentlichungstag und Bekanntmachung des Hinweises auf die Patenterteilung: **16.01.2008**
(21) Anmeldenummer: 03809275.5
(22) Anmeldetag: 09.10.2003
(51) Int. Cl.: B60J 10/00, B60J 10/06

(54) **DICHTUNGSPROFIL MIT ZIERLEISTE**
WEATHERSTRIP COMPRISING A TRIM PART
JOINT D'ETANCHEITE PROFILE A MOULURE DECORATIVE

(30) Priorität: 09.10.2002 DE 10247015
(43) Veröffentlichungstag der Anmeldung: 06.07.2005
(73) Patentinhaber: Metzeler Automotive Profile Systems GmbH, 88131 Lindau/Bodensee (DE)
(72) Erfinder: KRAUSE, Fritz, 88239 Wangen (DE)
(74) Vertreter: Preissner, Nicolaus
(86) Internationale Anmeldenummer: PCT/EP2003/011208
(87) Internationale Veröffentlichungsnummer: WO 2004/037576

(56) Entgegenhaltungen:
- EP-A- 1 232 887
- WO-A-00/73097
- WO-A-01/34933
- WO-A-01/87658
- DE-A- 19 922 749
- DE-A- 19 938 258
- DE-C- 10 134 465
- US-A- 5 743 047

## Beschreibung

Die vorliegende Erfindung betrifft ein Dichtungsprofil zum Abdichten einer beweglichen Fensterscheibe in einer Kraftfahrzeugtür mit einem aus einem elastischen Material hergestellten Grundkörper, in dem mindestens ein Dichtungsbereich und mindestens ein Befestigungsbereich zur Festlegung des Dichtungsprofils an einem Türflansch vorgesehen ist, und mit mindestens einer Zierleiste, die einen Blendenbereich und ein hiervon abragendes Befestigungselement aufweist, das formschlüssig an dem Grundkörper festlegbar ist.

Ein derartiges Dichtungsprofil ist aus der DE 197 36 899 C2 bekannt. Das Dichtungsprofil dient zum Abdichten eines Fensterschachts in einer Kraftfahrzeugtür. Die Zierblende weist ein von dem Blendenbereich abragendes Befestigungselement auf, das bei der Montage des Dichtungsprofils am Fahrzeug formschlüssig von einem schwenkbeweglich angeordneten Haltebereich des Dichtungsprofils umfasst wird.

Aus der DE 199 22 749 A1 ist ein anderes Dichtungsprofil bekannt, das einerseits zur Abdichtung einerbeweglichen Fensterscheibe und andererseits zur Abdichtung des Türspalts ausgebildet ist. Eine außenseitig aufgebrachte Zierleiste wird mittels U-förmigen Halteklammern an dem Grundkörper des Dichtungsprofils festgelegt.

Eine Dichtungsanordnung für die Tür eines Kraftfahrzeugs, die zum Abdichten eines eine Fensterscheibe aufnehmenden Schachts dient, wird in der WO 01/87658 A1 beschrieben. Die Dichtungsanordnung setzt sich aus einer inneren Fensterschachtdichtung und einer äußeren Fensterschachtdichtung zusammen. An der äußeren Fensterschachtdichtung ist eine Zierleiste angeordnet, die sich aus einem oberen Teil, das mit einer glänzenden, beispielsweise aus Metall bestehenden, Oberfläche versehen ist, und einem unteren Teil, das mit einer kontrastierenden, beispielsweise schwarzen Oberfläche, versehen ist, zusammensetzt. Das obere Teil und das untere Teil weisen jeweils einen Schenkel auf, die aneinander liegen und zusammen ein Einsteckschwert bilden. Das durch die Schenkel der zweigeteilten Zierleiste gebildete Einsteckschwert wird kraftschlüssig in einem Aufnahmekanal gehalten. Zu diesem Zweck ist die Innenfläche des Aufnahmekanals mit den Kraftschluss erhöhenden Befestigungslippen versehen. Zu einem wirksamen Kraftschluss trägt zudem bei, dass der Aufnahmekanal von dem oberen Halbrund eines im Querschnitt S-förmigen Verstärkungselements, das in einen Grundkörper der Fensterschachtdichtung eingebettet ist, umgriffen wird.

Eine Dichtungsanordnung zum Abdichten der Fensterscheibe eines Kraftfahrzeugs offenbart außerdem die EP 1 232 887 A2. Die Dichtungsanordnung weist eine die Oberkante der Fensterscheibe abdichtende Dichtung auf, an der eine Zierleiste befestigt ist. Die Zierleiste ist direkt auf einen Flansch des Kraftfahrzeugs aufgesteckt.

Der Erfindung liegt die Aufgabe zugrunde ein Dichtungsprofil vorzuschlagen, bei dem die Zierleiste in einfacher und sicherer Weise festlegbar ist.

Diese Aufgabe wird durch ein Dichtungsprofil gemäß Anspruch 1 gelöst. Bevorzugte Ausgestaltungen eines solchen Dichtungsprofils werden in den Ansprüchen 2 bis 8 definiert.

Das als Einsteckschwert ausgebildete Befestigungselement dient als Auflage für den Biegevorgang der Zierleiste. Weiterhin verhindert das im Wesentlichen senkrecht zu dem Blendenbereich ausgerichteten Befestigungselement ein Kippen des Blendenbereichs. Darüber hinaus wird eine tordierte Lage durch die vorgesehene Befestigung der Zierleiste ausgeschlossen. Schließlich ist die Herstellung und Montage sehr einfach, da zur Festlegung der Zierleiste keine zusätzlichen Teile, beispielsweise Klammern, erforderlich sind.

In dem Grundkörper ist ein schlitzförmiger Aufnahmekanal zur Aufnahme des Befestigungselements eingebracht. Bei der Montage der Zierleiste an dem Grundkörper wird das Befestigungselement in den schlitzförmigen Aufnahmekanal eingebracht und hierin formschlüssig festgelegt. Der Befestigungsbereich weist ein Verstärkungselement auf, das flexibel ausgebildet ist.

Der Grundkörper weist einen ersten Dichtungsbereich zum Abdichten der beweglichen Fensterscheibe und einen zweiten Dichtungsbereich zur Abdichtung des Türspalts auf. Der erste Dichtungsbereich weist Dichtlippen auf, die von dem Grundkörper abragen und an der beweglichen Fensterscheibe anliegen. Zur Abdichtung des Türspalts weist der zweite Dichtungsbereich Dichtlippen auf, die von dem Grundkörper abragen und an der Fahrzeugkarosserie anliegen.

Vorteilhaft ist die Zierleiste als stranggepresstes Aluminiumteil ausgebildet.

Nach einer vorteilhaften Ausgestaltung ragt das Befestigungselement von einem oben liegenden Endbereich des Blendenbereichs ab. In montiertem Zustand der Zierleiste ist somit das Befestigungselement oberhalb des Türflanschs angeordnet.

Bei einer anderen vorteilhaften Ausgestaltung ragt das Befestigungselement von einem mittleren Bereich des Blendenbereichs ab. Somit ist das Befestigungselement in montiertem Zustand der Zierleiste unterhalb des Türflanschs angeordnet.

Vorteilhaft sind an dem Blendenbereich Ansätze ausgebildet, die in zugeordneten Aufnahmen an dem Grundkörper eingreifen. Hierdurch wird eine formschlüssige Fixierung des Blendenbereichs an dem Grundkörper erzielt.

Vorteilhaft weisen die Dichtlippen eine außenseitige Beflockung auf.

Nachfolgend wird die Erfindung an Hand von Ausführungsbeispielen näher beschrieben, die in den Zeichnungen in schematischer Weise dargestellt sind. Hierin zeigen:
- Fig. 1: eine schematische Seitenansicht eines Fahrzeugs mit einem erfindungsgemäßen Dichtungsprofil;
- Fig. 2: einen Schnitt längs der Linie A-A in Fig. 1 bei einer ersten erfindungsgemäßen Ausführungsform;
- Fig. 3: einen Schnitt längs der Linie A-A in Fig. 1 bei einer zweiten erfindungsgemäßen Ausführungsform und
- Fig. 4: einen Teilschnitt durch das in Fig. 2 dargestellte Dichtungsprofil mit einer einen Aufnahmekanal endseitig verschließenden Abreißschnur.

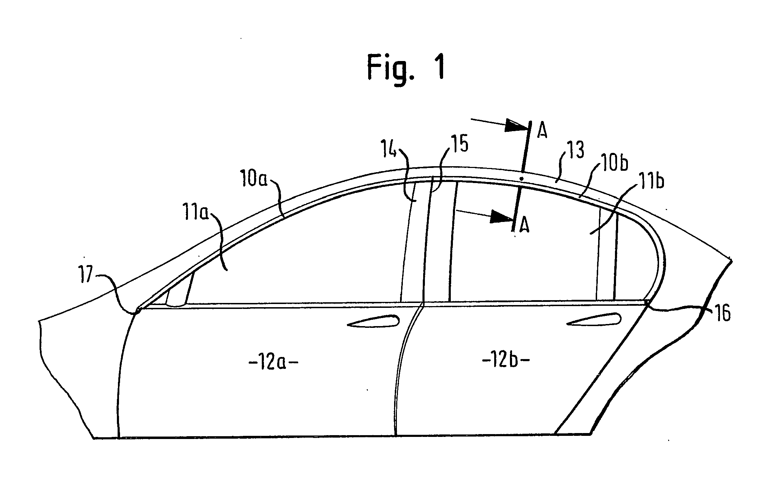

Fig. 1 zeigt die Seitenansicht eines Kraftfahrzeugs, das eine Vordertür 12a und eine Hintertür 12b aufweist, in denen jeweils eine bewegliche Fensterscheibe 11a, 11 b angeordnet ist, die in dem Türschacht der jeweiligen Tür 12a, 12b versenkbar ist. Zur Abdichtung der Fensterscheibe 11a, 11b sowie der Tür 12a, 12b gegenüber der Karosserie 13 ist an jeder Fahrzeugtür 12a, 12b ein Dichtungsprofil 10a, 10b vorgesehen. Das Dichtungsprofil 10a der Vordertür 12a erstreckt sich von einer Vorderkante 17 der Fahrzeugtür 12a bis zu der B-Säule 14 des Fahrzeugs. Das Dichtungsprofil 10b der Hintertür 12b erstreckt sich von der B-Säule 14 bis zu einer Hinterkante 16 der Fahrzeugtür 12b. Im Bereich der B-Säule 14 sind die Dichtungsprofile 10a, 10b getrennt, da hier der die Türen 12a, 12b trennende Spalt 15 verläuft.

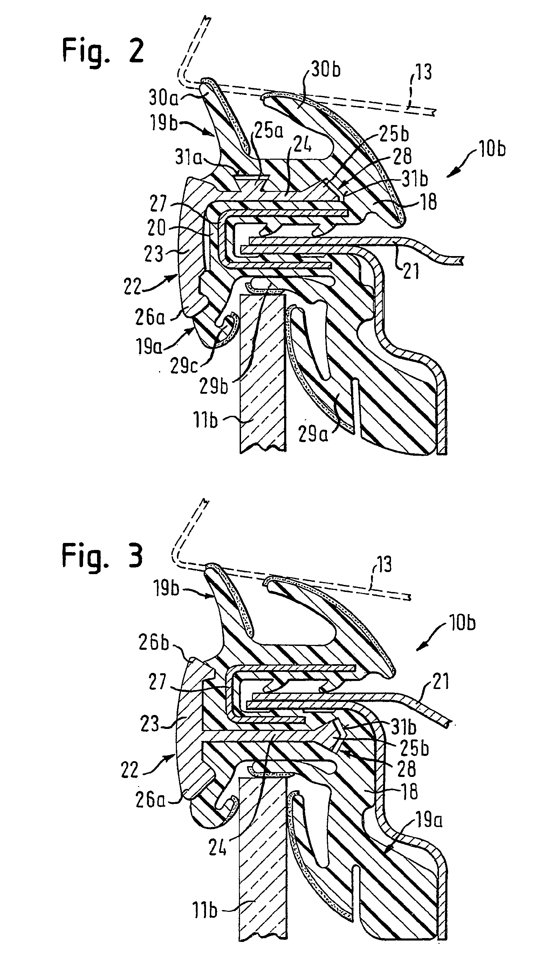

Fig. 2 zeigt einen Schnitt längs der Linie A-A in Fig. 1. Das Dichtungsprofil 10b weist einen einteiligen Grundkörper 18 auf, der aus einem elastomeren Material, beispielsweise EPDM, extrudiert ist. An dem Grundkörper 18 ist ein Befestigungsbereich 20 ausgebildet, in dem ein flexibles Verstärkungselement 27 eingebracht ist. Der Befestigungsbereich 20 dient der Festlegung des Dichtungsprofils 10b an einem Türflansch 21.

Das Dichtungsprofil 10b weist einen ersten Dichtungsbereich 19a auf, der der Abdichtung der beweglichen Fensterscheibe 11b dient. An dem Dichtungsprofil 19a sind Dichtlippen 29a, 29b, 29c vorgesehen, die an der Außenseite der Fensterscheibe 11b anliegen. Die Dichtlippen 29a, 29b, 29c sind jeweils mit einer Beflockung versehen. Weiterhin ist an dem Grundkörper 18 ein zweiter Dichtungsbereich 19b vorgesehen, der der Abdichtung der Fahrzeugtür 12b gegenüber der Karosserie 13 dient. Der zweite Dichtungsbereich 19b weist Dichtlippen 30a, 30b auf, die jeweils mit einer außenseitigen Beflockung versehen sind.

An dem Grundkörper 18 ist eine Zierleiste 22 festgelegt, die als Aluminiumstrangpreßprofil ausgebildet ist. Wie aus Fig. 1 ersichtlich ist, ist die Zierleiste 22 entsprechend dem Verlauf der Fahrzeuglinie gebogen ausgebildet. Die Zierleiste 22 weist einen von außen sichtbaren Blendenbereich 23 auf, von dem im wesentlichen senkrecht ein Befestigungselement 24 abragt. Das Befestigungselement 24 ist als längliches Einsteckschwert ausgebildet. Von dem Befestigungselement ragen zapfenartige Ansätze 25a, 25b ab. Zur formschlüssigen Aufnahme des Befestigungselements 24 weist der Grundkörper 18 einen schlitzförmigen Aufnahmekanal 28 auf, an dem Aufnahmen 31 a, 31b zur Aufnahme der Ansätze 25a, 25b eingeformt sind. Der Aufnahmekanal 28 ist oberhalb des Türflanschs 21 angeordnet. Somit ist auch das Befestigungselement 24 in montiertem Zustand der Zierleiste oberhalb des Türflanschs 21 positioniert.

Das von einem oberen Bereich der Zierleiste 22 abragende Befestigungselement 24 dient bei der Biegung der Zierleiste 22 entsprechend dem Verlauf der Fahrzeuglinie als Stütze für den Biegevorgang. Darüber hinaus wird durch die Ausgestaltung des Befestigungselements 24 als langes Einsteckschwert eine sichere Festlegung erzielt, die ein Kippen und Tordieren des Blendenbereichs 23 der Zierleiste 22 verhindert.

An dem Blendenbereich 23 ist endseitig ein Ansatz 26a vorgesehen, der formschlüssig an einer zugeordneten Aufnahme des Grundkörpers 18 festgelegt ist.

Bei der Montage des Dichtungsprofils 10b wird zunächst der Befestigungsbereich 20 des Grundkörpers 18 auf den Türflansch 21 aufgesteckt. Nachfolgend wird die Zierleiste 22 mit dem Befestigungselement 24 in den Aufnahmekanal 28 eingesteckt. Dann wird der Dichtungsbereich 19b an dem Befestigungselement 24 festgelegt.

In der dargestellten Endstellung wird eine sichere Fixierung der Zierleiste 22 an dem Grundkörper 18 erzielt.

Fig. 3 zeigt eine weitere Ausführungsform, zu deren Beschreibung die bereits eingeführten Bezugszeichen für gleiche oder funktionsgleiche Teile verwendet werden. Das in Fig. 3 dargestellte Dichtungsprofil 10b unterscheidet sich lediglich durch die abweichende Ausgestaltung der Zierleiste 22. Hierbei ragt der Befestigungsbereich 24 von einem mittleren Bereich des Blendenbereichs 23 der Zierleiste 22 ab. Das Befestigungselement 24 ist als langgestrecktes Einsteckschwert ausgebildet, das endseitig einen zapfenartigen Ansatz 25b aufweist. Das Befestigungselement 24 ist in einem schlitzförmigen Aufnahmekanal 28 des Grundkörpers 18 aufgenommen. Die Anordnung des Befestigungselements 24 und des Aufnahmekanals 28 bewirkt, daß das Befestigungselement 24 in montiertem Zustand der Zierleiste 22 unterhalb des Türflanschs 21 positioniert ist.

Die Endbereiche des Blendenbereichs 23 sind mit Ansätzen 26a, 26b ausgebildet, die in formschlüssigen Aufnahmen des Grundkörpers 18 aufgenommen sind.

Auch bei dieser Ausführungsform gestattet die Ausbildung des Befestigungselements 24 als langgestrecktes Einsteckschwert, daß dieses als Stütze für den Biegevorgang der Zierleiste 22 dient. Darüber hinaus verhindert das sich bis in die Tiefe des Grundkörpers 18 erstreckende Befestigungselement 24 ein Kippen des Blendenbereichs 23 der Zierleiste 22.

In prinzipiell ähnlicher Weise wie bei der Ausführungsform gemäß Fig. 2 erfolgt bei der Ausführungsform gemäß Fig. 3 zunächst die Montage des Grundkörpers 18 an dem Türflansch 21. Nachfolgend wird die Zierleiste 22 mit dem im wesentlichen senkrecht abragenden Befestigungselement 24 in den schlitzförmigen Aufnahmekanal 28 des Grundkörpers 18 eingebracht. Hierbei erfolgt eine formschlüssige Festlegung an dem Grundkörper 18.

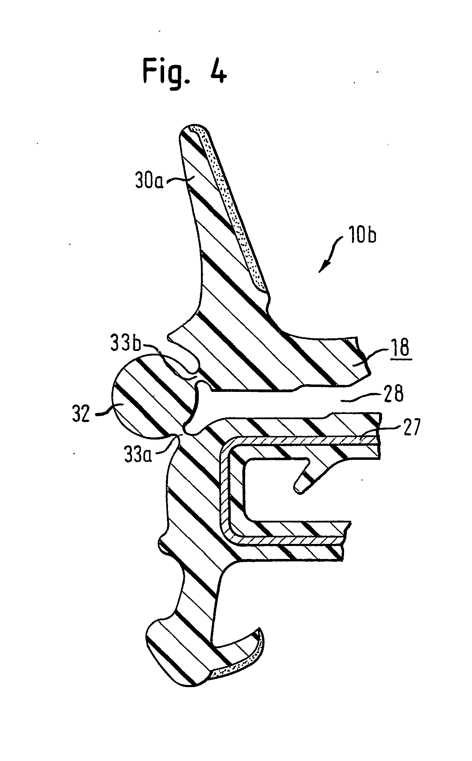

Fig. 4 zeigt das Dichtungsprofil 10b vor der Montage der Zierleiste 22. Der Aufnahmekanal 28 ist endseitig mit einer koextrudierten Abreißschnur 32 verschlossen, die über Stege 33a, 33b mit dem Grundkörper 18 verbunden ist. Die Abreißschnur verhindert eine Verschmutzung des Aufnahmekanals 28. Beim Abziehen der Abreißschnur 32 werden die Stege 33a, 33b durchtrennt, wodurch der Aufnahmekanal 28 freigegeben wird.

Allen vorstehend beschriebenen Ausführungsformen ist gemeinsam, daß durch die erfindungsgemäße Ausgestaltung der Zierleiste eine einfache Herstellung und Montage gewährleistet ist.

### Bezugszeichenliste

- 10a,b: Dichtungsprofil
- 11 a,b: Fensterscheibe
- 12a,b: Fahrzeugtür
- 13: Karosserie
- 14: B-Säule
- 15: Spalt
- 16: Hinterkante
- 17: Vorderkante
- 18: Grundkörper
- 19a,b: Dichtungsbereich
- 20: Befestigungsbereich
- 21: Türflansch
- 22: Zierleiste
- 23: Blendenbereich
- 24: Befestigungselement
- 25 a, b: Ansatz
- 26 a, b: Ansatz
- 27: Verstärkungselement
- 28: Aufnahmekanal
- 29 a, b, c: Dichtlippe
- 30 a, b: Dichtlippe
- 31 a, b: Aufnahme
- 32: Abreißschnur
- 33 a,b: Steg

## Patentansprüche

1. Dichtungsprofil (10a, 10b) zum Abdichten einer beweglichen Fensterscheibe (11 a, 11 b) in einer Tür (12a, 12b) eines Kraftfahrzeugs mit einem Grundkörper (18), der
a) aus einem elastischen Material hergestellt ist und
b) einen ersten Dichtungsbereich (19a), der zum Abdichten der Fensterscheibe (11a, 11 b) mit Dichtlippen (29a, 29b, 29c) versehen ist, die von dem Grundkörper (18) abragen und an der Fensterscheibe (11a, 11 b) anliegen,
c) einen zweiten Dichtungsbereich (19b), der zum Abdichten der Tür (12a, 12b) gegenüber der Karosserie (13) des Kraftfahrzeugs mit Dichtlippen (30a, 30b) versehen ist, die von dem Grundkörper (18) abragen und an der Karosserie (13) des Kraftfahrzeugs anliegen,
d) einen Befestigungsbereich (20), der zum Befestigen des Dichtungsprofils (10a, 10b) an einem Türflansch (21) festlegbar ist,
e) ein flexibles Verstärkungselement (27), das den Befestigungsbereich (20) im Bereich des Türflansches (21) verstärkt und einen im Wesentlichen parallel zu dem Türflansch (21) verlaufenden Schenkel aufweist, und
f) einen schlitzförmigen Aufnahmekanal (28), der sich entlang des Schenkels des Verstärkungselements (27) erstreckt und mit wenigstens einer Aufnahme (31a, 31b) versehen ist, umfasst, und einer Zierleiste (22), die
a) in ihrer Längsrichtung gebogen ist,
b) einen Blendenbereich (23) umfasst und
c) ein Befestigungselement (24), das als längliches, im Wesentlichen senkrecht zu dem Blendenbereich (23) ausgerichtetes Einsteckschwert ausgebildet und mit mindestens einem Ansatz (25a, 25b) versehen ist, umfasst;
wobei das Befestigungselement (24) derart in dem Aufnahmekanal (28) angeordnet ist, dass der Ansatz (25a, 25b) des Befestigungselements (24) formschlüssig in die zugeordnete Aufnahme (31a, 31b) des Aufnahmekanals (28) eingreift und
wobei der Grundkörper (18) in dem Bereich, der sich auf der Seite des Befestigungselements (24), die dem Schenkel des Verstärkungselements (27) abgewandt ist, befindet, frei von dem Verstärkungselement (27) ist.

2. Dichtungsprofil nach Anspruch 1, **dadurch gekennzeichnet, dass** das Verstärkungselement (27) im Querschnitt im wesentlichen U-förmig ist.

3. Dichtungsprofil nach Anspruch 1 oder 2, **dadurch gekennzeichnet, dass** die Zierleiste (22) ein stranggepresstes Aluminiumteil ist.

4. Dichtungsprofil nach einem der Ansprüche 1 bis 3, **dadurch gekennzeichnet, dass** die Zierleiste (22) im Querschnitt im Wesentlichen L-förmig ist, wobei das Befestigungselement (24) von einem oben liegenden Endbereich des Blendenbereichs (23) abragt.

5. Dichtungsprofil nach einem der Ansprüche 1 bis 3, **dadurch gekennzeichnet, dass** die Zierleiste (22) im Querschnitt im Wesentlichen T-förmig ist, wobei das Befestigungselement (24) von einem mittleren Bereich des Blendenbereichs (23) abragt.

6. Dichtungsprofil nach einem der Ansprüche 1 bis 5, **dadurch gekennzeichnet, dass** an dem Blendenbereich Ansätze (26a, 26b) ausgebildet sind, die in zugeordnete Aufnahmen an dem Grundkörper (18) eingreifen.

7. Dichtungsprofil nach einem der Ansprüche 1 bis 6, **dadurch gekennzeichnet, dass** der Aufnahmekanal (28) vor der Montage der Zierleiste (22) durch eine Abreißschnur (32), die über Stege (33a, 33b) mit dem Grundkörper (18) verbunden ist, verschlossen ist.

8. Dichtungsprofil nach einem der Ansprüche 1 bis 7, **dadurch gekennzeichnet, dass** der Aufnahmekanal (28) entweder zwischen dem Befestigungsbereich (20) und dem ersten Dichtungsbereich (19a) oder zwischen dem Befestigungsbereich (20) und dem zweiten Dichtungsbereich (19b) angeordnet ist.

## Claims

1. A weatherstrip (10a, 10b) for sealing a movable window pane (11 a, 11 b) in a door (12a, 12b) of a motor vehicle comprising a base body (18)
(a) made of an elastic material
(b) provided with a first sealing area (19a) having sealing lips (29a, 29b, 29c), for sealing the window (11a, 11b), which protrude from the base body (18) and which lie against the window pane (11 a, 11 b),
(c) a second sealing area (19b), for sealing the door (12a, 12b) against the bodywork (13) of the vehicle, having sealing lips (30a, 30b) which protrude from the base body (18) and lie against the bodywork (13) of the vehicle
(d) a fastening area (20) which is configured for securing the weatherstrip (10a, 10b) to the door flange (21)
(e) a flexible reinforcing element (27), for strengthening the fastening area (20) in the region of the door flange (21), having a limb portion running essentially parallel to the door flange (21), and
(f) a slit-shaped accommodating channel (28) which extends along the limb of the reinforcing element (27) and is provided with at least one recess (31 a, 31 b), and
a trim part (22) which
(a) is curved along its length,
(b) comprises a cover area (23) and
(c) a fastening element (24) configured as an elongated insertion limb which is oriented essentially perpendicular to the cover area (23) and which is provided with at least one projection (25a, 25b),
whereby the fastening element (24) is arranged in the accommodating channel (28) such that the projection (25a, 25b) of the fastening element (24) engages positively in the corresponding recess (31 a, 31 b) of the accommodating channel (28) and
whereby the base body (18), on that side of the fastening element (24) which is distant from the limb of the reinforcing element (27), is free from the reinforcing element (27).

2. Weatherstrip according to Claim 1 **characterised in that** the reinforcing element (27) is essentially U-shaped in cross-section.

3. Weatherstrip according to Claim 1 or 2 **characterised in that** the trim part (22) is an extruded aluminium part.

4. Weatherstrip according to any of the claims 1 to 3 **characterised in that** the trim part (22) is essentially L-shaped in cross-section, whereby the fastening element (24) protrudes beyond an end portion of the cover area (23) lying above it.

5. Weatherstrip according to any of the claims 1 to 3 **characterised in that** the trim part (22) is essentially T-shaped in cross-section, whereby the fastening element (24) protrudes beyond the middle portion of the cover area (23).

6. Weatherstrip according to any of the claims 1 to 5 **characterised in that** projections (26a, 26b) are provided on the cover area which engage with corresponding recesses in the base body (18).

7. Weatherstrip according to any of the claims 1 to 6 **characterised in that**, prior to the fitting of the trim part (22), the accommodating channel (28) is closed by a tear-off cord (32) connected to the base body (18) via web parts (33a, 33b).

8. Weatherstrip according to any of the claims 1 to 7 **characterised in that** the accommodating channel (28) is arranged either between the fastening area (20) and the first sealing area (19a) or between the fastening area (20) and the second sealing area (19b).

## Revendications

1. Profilé d'étanchéité (10a, 10b) pour étancher une vitre mobile (11 a, 11b) dans une portière (12a, 12b) d'un véhicule automobile, comportant un corps de base (18) qui
a) est réalisé à partir d'un matériau élastique, et comprend :
b) une première zone d'étanchéité (19a) pourvue de lèvres d'étanchéité (29a, 29b, 29c) pour étancher la vitre (11a, 11 b), qui font saillie du corps de base (18) et prennent appui contre la vitre (11 a, 11 b),
c) une seconde zone d'étanchéité (19b) pourvue de lèvres d'étanchéité (30a, 30b) pour étancher la portière (12a, 12b) par rapport à la carrosserie (13) du véhicule automobile, qui font saillie du corps de base (18) et prennent appui contre la carrosserie (13) du véhicule automobile,
d) une zone de fixation (20) susceptible d'être immobilisée pour fixer le profilé d'étanchéité (10a, 10b) contre une bride de portière (21),
e) un élément de renforcement (27) flexible qui vient renforcer la zone de fixation (20) au niveau de la bride de portière (21) et qui comporte une branche s'étendant sensiblement parallèlement à la bride de portière (21), et
f) un canal de logement (28) en forme de fente qui s'étend le long de la branche de l'élément de renforcement (27) et qui est muni d'au moins un logement (31 a, 31 b), et
une baguette enjoliveuse (22) qui
a) est cintrée dans sa direction longitudinale,
b) comprend une zone formant écran (23), et
c) comporte un élément de fixation (24) réalisé sous forme de lame enfichable allongée orientée sensiblement perpendiculairement à la zone formant écran (23) et pourvu d'au moins un talon (25a, 25b),
l'élément de fixation (24) étant agencé dans le canal de logement (28) de telle sorte que le talon (25a, 25b) de l'élément de fixation (24) s'engage en coopération de formes dans le logement associé (31a, 31 b) du canal de logement (28), et
le corps de base (18) étant dépourvu d'élément de renforcement (27) dans la zone qui se trouve sur le côté de l'élément de fixation (24) détourné de la branche de l'élément de renforcement (27).

2. Profilé d'étanchéité selon la revendication 1, **caractérisé en ce que** l'élément de renforcement (27) présente une section transversale sensiblement en forme de U.

3. Profilé d'étanchéité selon la revendication 1 ou 2, **caractérisé en ce que** la baguette enjoliveuse (22) est une pièce extrudée en aluminium.

4. Profilé d'étanchéité selon l'une des revendications 1 à 3, **caractérisé en ce que** la baguette enjoliveuse (22) présente une section transversale sensiblement en forme de L, l'élément de fixation (24) faisant saillie d'une région d'extrémité située en haut de la zone formant écran (23).

5. Profilé d'étanchéité selon l'une des revendications 1 à 3, **caractérisé en ce que** la baguette enjoliveuse (22) présente une section transversale sensiblement en forme de T, l'élément de fixation (24) faisant saillie d'une région centrale de la zone formant écran (23).

6. Profilé d'étanchéité selon l'une des revendications 1 à 5, **caractérisé en ce que** des talons (26a, 26b) sont réalisés sur la zone formant écran, qui viennent s'engager dans des logements associés dans le corps de base (18).

7. Profilé d'étanchéité selon l'une des revendications 1 à 6, **caractérisé en ce qu'**avant le montage de la baguette enjoliveuse (22), le canal de logement (28) est refermé par un cordon frangible (32) qui est relié au corps de base (18) via des barrettes (33a, 33b).

8. Profilé d'étanchéité selon l'une des revendications 1 à 7, **caractérisé en ce que** le canal de logement (28) est agencé soit entre la zone de fixation (20) et la première zone d'étanchéité (19a) soit entre la zone de fixation (20) et la seconde zone d'étanchéité (19b).
